# EUROPÄISCHE PATENTANMELDUNG

(11) **EP 4 851 596 A1**
(43) Veröffentlichungstag der Anmeldung: **09.12.2026**
(21) Anmeldenummer: 25180274.0
(22) Anmeldetag: 02.06.2025
(51) Int. Cl.: G01L 9/00, G05B 15/02, G01L 19/00

(54) **MESSSYSTEM ZUR BESTIMMUNG EINES INNENDRUCKS EINER ROHRLEITUNG**

(71) Anmelder: i-spring Systems AG, 8618 Oetwil am See (CH)
(72) Erfinder: OURIEV, Boris, 9200 Gossau (CH)
(74) Vertreter: Weickmann & Weickmann PartmbB

(57) **Zusammenfassung**

Die vorliegende Erfindung betrifft ein Messsystem (10) zur Bestimmung eines Innendrucks einer Rohrleitung (12), wobei das Messsystem (10) wenigstens eine Rohrleitung (12), welche zum Transport eines Mediums eingerichtet ist; und wenigstens eine erste Messvorrichtung (32) umfasst, welche wenigstens ein Sensorelement (34) und eine mit dem Sensorelement (34) elektrisch gekoppelte Leiterplatte (36) umfasst, wobei die erste Messvorrichtung (32) an einer Außenfläche eines ersten Rohrabschnitts (14) der Rohrleitung (12) angeordnet ist und dazu eingerichtet ist, eine Querschnittsveränderung des ersten Rohrabschnitts (14) zu detektieren, um auf Grundlage der detektierten Querschnittsveränderung einen Innendruck des ersten Rohrabschnitts (14) zu bestimmen. Ferner betrifft die Erfindung ein Verfahren zum Steuern eines Innendrucks einer Rohrleitung (12).

## Beschreibung

Die vorliegende Erfindung betrifft ein Messsystem zur Bestimmung eines Innendrucks einer Rohrleitung sowie ein Verfahren zum Steuern eines Innendrucks einer Rohrleitung.

Herkömmliche Rohrleitungen werden sowohl im industriellen als auch im privaten Umfeld zahlreich verwendet. Beispiele hierfür sind Rohrleitungen zum Transport von Wasser, Wasserstoff oder Treibstoff, welche unter anderem in der Chemie-, Pharma- oder Lebensmittelindustrie zum Einsatz kommen. Hauptsächlich dienen sie dem Transport von Fluiden in Form von Flüssigkeiten und Gasen, können jedoch je nach Anwendungsfall auch zur Beförderung von riesel- oder pumpfähigen Feststoffen verwendet werden. Neben einem oder mehreren oft metallischen Rohren umfasst eine Rohrleitung üblicherweise auch Rohrverbindungen, Rohrhalterungssysteme und Rohrleitungskennzeichnungen sowie gegebenenfalls Armaturen, beispielsweise Pumpen, Ventile, Sperrklappen, Sicherheitsventile, Druckablässe, aktive Druckpulsationsdämpfer usw., und Dämmungen. Diese Komponenten, insbesondere jedoch die Rohre, müssen dazu in der Lage sein, über einen längeren Zeitraum hinweg anwendungsspezifischen Belastungen standzuhalten. Diese Belastungen beziehen sich insbesondere auf einen statischen oder dynamischen Druck, welcher durch ein Fluid oder einen Feststoff im Inneren einer Rohrleitung erzeugt wird, sowie auf die Temperatur und chemische Zusammensetzung des zu transportierenden Mediums.

Folglich werden Rohrleitungen je nach Anwendungsfall aus unterschiedlichen Materialien gefertigt und entsprechend dimensioniert. Die Rohre einer Rohrleitung werden häufig aus Metall gefertigt, insbesondere aus Kupfer oder Edelstahl. In den letzten Jahren haben ferner Kunststoffrohre, beispielsweise aus Polyethylen oder Polypropylen, an Bedeutung gewonnen und werden regelmäßig in den Bereichen der Wasser- und Wärmeversorgung eingesetzt. Ein weiterer wichtiger Punkt ist die Ausbildung eines Rohres mit einer ausreichend dicken Wandstärke, welche üblicherweise mittels der sogenannten Kesselformel berechnet wird. Zur Ermittlung des notwendigen Innen- und Außendurchmessers eines Rohres wird hierbei unter anderem der Nenndruck herangezogen, welcher sich auf einen maximal zulässigen Innendruck eines Rohres während des Betriebs einer Rohrleitung bezieht und im Bereich von mehreren hundert bar liegen kann.

Die Beachtung dieser Kriterien ist von hoher Relevanz, um den reibungslosen Betrieb einer Rohrleitung zu gewährleisten und insbesondere die Gefahr eines Rohrbruchs zu minimieren. Rohrbrüche können nämlich mit erheblichen finanziellen Schäden und längerem Stillstand einer Anlage einhergehen, in welcher das betroffene Rohr verbaut ist. Eine weitere Gefahrenquelle liegt in der Ablagerung von Feststoffen im Inneren einer Rohrleitung, welche beispielsweise an Vorsprüngen oder an Bereichen auftreten können, an welchen ein Strömungswechsel von laminarer zu turbulenter Strömung oder vice versa stattfindet. Derartige Ablagerungen können im schlimmsten Fall zur Verstopfung eines Rohres führen.

Aus diesen Gründen müssen Rohrleitungen regelmäßig gewartet und gegebenenfalls gereinigt werden, was jedoch wiederum zeit- sowie kostenaufwendig ist und ebenfalls zum Stillstand einer Anlage führen kann. Dies gilt insbesondere für Rohrleitungen, welche aufgrund spezifischer Anwendungsfälle höhere Standards einhalten müssen. Ein Beispiel hierfür sind wasserdampfführende Rohrleitungen in Dampfkraftwerken.

Dementsprechend besteht ein Bedarf an Messvorrichtungen bzw. Messverfahren, welche dazu in der Lage sind, den Zustand einer Rohrleitung zuverlässig zu überwachen, um Wartungen und Rohrreinigungen rechtzeitig durchführen zu können.

Konventionelle Messverfahren zur Bestimmung eines Innendrucks einer Rohrleitung erfordern jedoch Bohrungen, Gewindeschneiden oder das Einschrauben von

Drucksensoren in die Rohrleitung, wodurch die strukturelle Integrität der betroffenen Rohrleitung beeinträchtigt wird. Ein Alternative hierzu stellen aufklebbare Dehnungsmessstreifen dar, welche Dehnungen der Rohrleitung messen, jedoch meist eindimensional ausgelegt sind und dementsprechend keine umfangreiche Bestimmung des Innendrucks eines Rohres einer Rohrleitung ermöglichen. Häufig ist ferner das Auslesen und Auswerten der gemessenen Dehnungsparameter problematisch, da Rohrleitung oftmals in schwer zugänglichen Bereichen oder sogar in Wänden verbaut sind.

Es ist daher die Aufgabe der vorliegenden Erfindung, ein Messsystem bereitzustellen, welches eine präzise Echtzeit-Überwachung einer Rohrleitung ermöglicht und dabei die strukturelle Integrität der Rohrleitung nicht beeinträchtigt.

Diese Aufgabe wird erfindungsgemäß in einem ersten Aspekt durch ein Messsystem zur Bestimmung eines Innendrucks einer Rohrleitung gelöst, wobei das Messsystem wenigstens eine Rohrleitung, welche zum Transport eines Mediums eingerichtet ist, und wenigstens eine erste Messvorrichtung umfasst, welche wenigstens ein Sensorelement und eine mit dem Sensorelement elektrisch gekoppelte Leiterplatte umfasst, wobei die erste Messvorrichtung an einer Außenfläche eines ersten Rohrabschnitts der Rohrleitung angeordnet ist und dazu eingerichtet ist, eine Querschnittsveränderung des ersten Rohrabschnitts zu detektieren, um auf Grundlage der detektierten Querschnittsveränderung einen Innendruck des ersten Rohrabschnitts zu bestimmen.

Im Betrieb der Rohrleitung wird aufgrund eines zu transportierenden Mediums, d.h. eines Fluids, eines Feststoffs oder einer Mischung davon, im Inneren eines ersten Rohrabschnitts eines Rohres der Rohrleitung ein statischer oder dynamischer Druck erzeugt. Dieser Innendruck wirkt senkrecht auf die Rohrinnenwand und erzeugt bei Überschreitung eines materialspezifischen Schwellenwertes des ersten Rohrabschnitts an der betroffenen Stelle des ersten Rohrabschnitts eine Querschnittsveränderung in Form einer Dehnung bzw. einer Umfangsdehnung. Der materialspezifische Schwellenwert ist abhängig von den Materialeigenschaften, insbesondere Materialart, Querschnittsprofil, Wandstärke, Innen- und Außendurchmesser sowie Elastizitätsmodul und Poisson-Zahl, des ersten Rohrabschnitts. So tritt beispielsweise eine Dehnung des ersten Rohrabschnitts in Folge eines erhöhten Innendrucks bei einem dünnwandigen Kunststoffrohr schneller ein als bei einem dickwandigen Edelstahlrohr.

Die Querschnittsveränderung entspricht in dem beschriebenen Fall einer Querschnittsvergrößerung und ist proportional zum aufgebrachten Innendruck. Die Querschnittsvergrößerung betrifft sowohl den Innendurchmesser als auch den Außendurchmesser des ersten Rohrabschnitts und kann daher auf der Außenfläche des ersten Rohrabschnitts gemessen werden.

Nach Abfall des Innendrucks auf das ursprüngliche Ausgangsniveau reduziert sich der Querschnitt des ersten Rohrabschnitts in der Regel auf den ursprünglichen Durchmesser. Die messbare Querschnittsveränderung des ersten Rohrabschnitts kann somit sowohl eine Querschnittsvergrößerung als auch eine Querschnittsverkleinerung umfassen.

Gemäß einem wichtigen Merkmal des ersten Aspekts der vorliegenden Erfindung ist die an der Außenfläche des ersten Rohrabschnitts der Rohrleitung angebrachte erste Messvorrichtung dazu eingerichtet, eine Querschnittsveränderung des ersten Rohrabschnitts zu detektieren, um auf Grundlage der detektierten Querschnittsveränderung einen Innendruck des ersten Rohrabschnitts zu bestimmen. Die Bestimmung des Innendrucks erfolgt dabei indirekt, d.h. der Innendruck wird nicht unmittelbar gemessen, sondern durch Detektion und Auswertung von Dehnungen an der Außenwand des ersten Rohrabschnitts ermittelt. Hierfür bestimmt die erste Messvorrichtung zeitpunktspezifische Dehnungsparameter, welche auf einer detektierten Dehnung des ersten Rohrabschnitts beruhen und materialspezifische Eigenschaften des ersten Rohrabschnitts, insbesondere Materialart, Querschnittsprofil, Wandstärke, Innen- und Außendurchmesser sowie Elastizitätsmodul und Poisson-Zahl, einbeziehen. Vorzugsweise weist der erste Rohrabschnitt ein zylindrisches Querschnittsprofil auf, wobei auch andere Querschnittsprofile denkbar sind. Aus den gewonnenen Daten in Form von Dehnungsparametern können direkte Zusammenhänge zwischen Betriebsparametern der Rohrleitung, welche unter anderem die Art bzw. Zusammensetzung sowie den Volumenstrom des transportierten Mediums in der Rohrleitung betreffen, und Zustands- bzw. Belastungsinformationen der gesamten Rohrleitung abgeleitet werden.

Das erfindungsgemäße Messsystem hat insbesondere den Vorteil, dass der erste Rohrabschnitt nicht bearbeitet werden muss, um eine Messvorrichtung an diesem anzubringen. Da der erste Rohrabschnitt zur Anordnung der ersten Messvorrichtung weder angepasst noch bearbeitet werden muss, wird die strukturelle Integrität der Rohrleitung gewahrt. Ferner ist die erste Messvorrichtung aufgrund ihrer Anbringung an der Außenfläche des ersten Rohrabschnitts einfach und kostengünstig einsetzbar, da beispielsweise keine zusätzlichen Dichtungselemente für die Anbringung der ersten Messvorrichtung notwendig sind. Das erfindungsgemäße Messsystem ist dadurch ATEX sowie FDA konform und kann entsprechend selbst in gefährlichen Bereichen, d.h. in Bereichen, in welchen explosionsfähige Atmosphären auftreten können, und in der Lebensmittelindustrie eingesetzt werden.

Die erste Messvorrichtung ist außerdem aufgrund ihrer Anbringung an der Außenfläche im Vergleich zu eingebauten Drucksensoren einfach zu erreichen, was insbesondere im Falle einer Wartung von Vorteil ist. Schließlich benötigt die erste Messvorrichtung des erfindungsgemäßen Messsystems keinen direkten Kontakt zum transportierten Medium. Dadurch werden Messfehler eliminiert, welche in herkömmlichen Messsystemen durch Lufteinschlüsse bzw. Blasenbildung, Schmutz, Turbulenz oder Trägheit von Membranen entstehen können. Darüber hinaus ist das System immun gegenüber fluiddynamischen Störungen und bietet somit eine stabile und wiederholbare Möglichkeit zur Bestimmung des Innendrucks.

Insbesondere kann das erfindungsgemäße Messsystem mittels der bestimmten Dehnungsparameter eine Prognose zum Zustand des ersten Rohrabschnitts erstellen. Eine solche Prognose kann sich beispielsweise auf die Anzahl zu erwartender Dehnungszyklen bei fortlaufendem Betrieb der Rohrleitung beziehen. Anhand der Prognose kann anschließend ein Belastungsprofil des ersten Rohrabschnitts sowie der Rohrleitung an sich abgeleitet werden, welches wiederum Rückschlüsse zu Wartungsintervallen sowie generell zur Lebensdauer der Rohrleitung ermöglicht.

Das erfindungsgemäße Messsystem kann eine Mehrzahl erster Messvorrichtungen umfassen, die jeweils an verschiedenen Rohrabschnitten anbringbar sind. Folglich wird die parallele Detektion einer Mehrzahl von Dehnungen bzw. Querschnittsveränderungen ermöglicht, welche in der Rohrleitung auftreten. Die Anzahl der Messvorrichtungen kann dabei je nach Belieben erweitert oder reduziert werden. Durch Synchronisierung der Messvorrichtung entsteht folglich ein Netzwerk an Messpunkten, welche dezentral ausgewertet werden können, um möglichst umfangreiche Informationen zum Belastungszustand der Rohrleitung zu erhalten. Neben dem genannten ersten Rohrabschnitt können erste Messvorrichtungen auch an Rohrbögen, Abzweigungen, Ventilen, Verteilerstellen, Einlässen bzw. Auslässen von Pumpenanlagen sowie an Ein- oder Ausgängen von Filtrations- oder Wärmetauscheranlagen der Rohrleitung oder an unmittelbar mit der Rohrleitung gekoppelten Abschnitten angeordnet sein, um entsprechend der zuvor sowie nachfolgend für den ersten Rohrabschnitt beschriebenen Vorgehensweise Querschnittsveränderungen einer jeweiligen Komponente zu detektieren und darauf basierend Innendrücke der Komponenten zu bestimmen. Durch Bereitstellung mehrere miteinander vernetzter Messvorrichtungen entlang einer Rohrleitung wird eine ortsaufgelöste Innendrucküberwachung ermöglicht. Kritische Punkte wie Rohrbögen, Verteiler, Ventile oder Filtereinheiten lassen sich dadurch gezielt analysieren.

An dieser Stelle sei angemerkt, dass das erfindungsgemäße Messsystem neben Rohren bzw. Rohrabschnitten einer Rohrleitung auch an Schläuchen anbringbar und analog zur beschriebenen Vorgehensweise zur Bestimmung eines Innendrucks eines Schlauchs einsetzbar ist.

Gemäß einer bevorzugten Ausführungsform des erfindungsgemäßen Messsystems kann die erste Messvorrichtung anhand vordefinierter Druckwerte und auf Grundlage materialspezifischer Eigenschaften des ersten Rohrabschnitts kalibriert sein. Zur Kalibrierung der ersten Messvorrichtung wird ein insbesondere mehrstufiger Drucktest durchgeführt, bei welchem vordefinierte Innendruckwerte, welche sich in einem zulässigen Druckbereich bewegen, an der Rohrleitung angelegt werden. Die vordefinierten Innendruckwerte basieren dabei auf den materialspezifischen Eigenschaften des ersten Rohrabschnitts sowie auf einem vordefinierten Volumenstrom des Mediums in der Rohrleitung.

Die aus dem Drucktest resultierenden Querschnittveränderungen des ersten Rohrabschnitts werden von der ersten Messvorrichtung detektiert und darauf basierend Dehnungsparameter bestimmt, wie zuvor beschrieben. Die gemessenen Dehnungsparameter werden anschließend mittels polynomieller Regressionsverfahren, beispielsweise durch ein Polynom zweiter oder dritter Ordnung bzw. ein sogenanntes Kraft-Dehnungs-Displacement-Polynom, mit den bekannten, vordefinierten Innendruckwerten in Beziehung gesetzt. Daraus entsteht ein Kalibriermodell, welches auf spezifischen Material- und Geometrieparametern der Rohrleitung basiert. Das Kalibriermodell kann ferner Umgebungsbedingungen, insbesondere die Temperatur des ersten Rohrabschnitts sowie eine Umgebungstemperatur berücksichtigen. Eine Kalibrierung der ersten Messvorrichtung ist zu einem beliebigen Zeitpunkt möglich, insbesondere wird sie jedoch unmittelbar nach dem Anbringen der ersten Messvorrichtung an dem ersten Rohrabschnitt durchgeführt.

Ferner kann die Kalibrierung der ersten Messvorrichtung Materialunregelmäßigkeiten, beispielsweise lokale Unrundheiten des ersten Rohrabschnitts, variierende Wandstärken sowie die Querschnittsform des ersten Rohrabschnitts berücksichtigen, da diese das Dehnungsverhalten des ersten Rohrabschnitts beeinflussen können. Zusätzlich kann eine Feinkalibrierung vorgenommen werden, bei welcher ein Drucktest mit konstanten Innendrücken, beispielsweise bei 10 bar, durchgeführt wird und daraufhin der angelegte Druck minimal erhöht oder verringert wird, beispielsweise um ± 0,1 bar, um daraus resultierende Änderungen des Dehnungsverhaltens des ersten Rohrabschnitts zu erfassen.

Des Weiteren kann vor der Anbringung der ersten Messvorrichtung an einer Außenfläche des ersten Rohrabschnitts eine Analyse durchgeführt werden, um eine für die Anbringung der ersten Messvorrichtung geeignete Position an der Rohrleitung zu bestimmen. Diese Vorab-Analyse dient zur optimalen Positionierung der ersten Messvorrichtung und kann simulationsgestützt mittels Finite-Element-Methode (FEM) durchgeführt werden, um Regionen mit maximaler Dehnung bei vordefinierten Innendruckwerten zu identifizieren. Dabei werden sowohl statische als auch dynamische Belastungen, Materialeigenschaften und Eigenfrequenzen sowie sich daraus ergebende Resonanzknoten entlang der Rohrleitung berücksichtig, um eine Position an dem ersten Rohrabschnitt mit maximaler Empfindlichkeit und Störfestigkeit bei der Dehnungsdetektion zu identifizieren.

Gemäß einer bevorzugten Ausführungsform des erfindungsgemäßen Messsystems kann das Sensorelement wenigstens einen Dehnungsmessstreifen (DMS) umfassen. Der DMS kann an einer beliebigen Stelle auf der Außenfläche des ersten Rohrabschnitts angebracht, insbesondere geklebt, werden, um die Querschnittsveränderungen bzw. Dehnungen des ersten Rohrabschnitts zu detektieren. DMS sind vorteilhafterweise kostengünstig, langlebig und müssen im Vergleich zu rein elektrisch betriebenen Sensoren seltener gewartet werden. Bei dem DMS kann es sich um einen keramischen DMS, einen Standard-Folien-DMS oder eine Kombination davon handeln. Ein keramischer DMS eignet sich insbesondere dann, wenn eine hohe Frequenzantwort oder erhöhte Empfindlichkeit gegenüber kleinen Druckänderungen erforderlich ist. Dessen hoher Dehnungsempfindlichkeitskoeffizient, welcher auch als Gauge-Faktor bezeichnet wird, erlaubt eine präzise Detektion selbst kleinster Dehnungen und ist somit dazu in der Lage, relativ niedrige Schwankungen des Innendrucks zu detektieren.

Der DMS der ersten Messvorrichtung ist über wenigstens eine Messbrücke, insbesondere eine Wheatstone'sche Messbrücke, mit der Leiterplatte der ersten Messvorrichtung gekoppelt, um die von dem DMS erfassten Dehnungen in elektrische Signale umzuwandeln, aus welchen schließlich die Dehnungsparameter bestimmt werden können.

Insbesondere kann das Sensorelement eine Mehrzahl von DMS, vorzugsweise drei DMS, umfassen, wobei die DMS der Mehrzahl von DMS derart in dem Sensorelement angeordnet sind, dass jeweils zwei benachbarte DMS in Bezug auf deren Haupterstreckungsrichtungen einen Winkel zueinander aufspannen, um Querschnittsveränderung des ersten Rohrabschnitts in voneinander unterschiedlichen Richtungen gemäß den Haupterstreckungsrichtungen der DMS zu detektieren. Besagter Winkel beträgt zwischen 0° und 180°. Die Haupterstreckungsrichtung eines DMS bezieht sich dabei auf seine Anordnung auf der Außenfläche des ersten Rohrabschnitts. Die vorzugsweise drei DMS bilden in der beschriebenen Konstellation eine sogenannte DMS-Rosette, welche die Detektion von Dehnungen bzw. Querschnittsveränderungen in unterschiedlichen Richtungen am ersten Rohrabschnitt und somit eine dreidimensionale Dehnungsmessung ermöglicht. Jeder einzelne DMS liefert Messsignale, welche charakteristisch für die Anordnungsrichtung des jeweiligen DMS sind. Es ist ebenfalls denkbar, dass eine Mehrzahl einzelner DMS oder eine Mehrzahl von DMS-Rosetten, welche auf der Außenfläche des ersten Rohrabschnitts beabstandet angeordnet sind, von einer ersten Messvorrichtung umfasst sind.

Je nach Ausgestaltung und Oberflächenstruktur des ersten Rohrabschnitts kann es wünschenswert sein, zumindest das Sensorelement der ersten Messvorrichtung anzupassen. Daher kann das Sensorelement zur Anordnung auf der Außenfläche des ersten Rohrabschnitts gemäß einer optionalen Ausführungsform als Folie ausgebildet, mit einem keramischen Substrat beschichtet, metallisiert und in eine Glasschicht eingebettet oder direkt auf die Außenfläche aufgedruckt sein.

Durch Ausbildung als insbesondere flexible Folie kann das Sensorelement in engem Kontakt auf der Außenfläche des ersten Rohrabschnitts angeordnet werden, was im Falle einer gekrümmten oder unebenen Oberfläche des ersten Rohrabschnitts vorteilhaft ist. Bei Verwendung eines oder mehrerer DMS können diese innerhalb der Folie entsprechend einem Messgitter, gegebenenfalls mit unterschiedlichen Ausrichtungen, in vordefinierten Richtungen in der Folie integriert sein. So kann ein DMS beispielsweise einen Winkel von 0°, 45° oder 90° relativ zur Haupterstreckungsrichtung des ersten Rohrabschnitts aufspannen. Eine keramische Beschichtung des Sensorelements, beispielsweise in Form eines Aluminiumoxid-Substrats, kann vorgenommen werden, wenn eine Anwendung der ersten Messvorrichtung bei hohen Temperaturen und/oder eine korrodierte Außenfläche des ersten Rohrabschnitts vorliegt. Die Ausbildung des Sensorelements als metallisierte Struktur auf einer Glasschicht dient - wie die zuvor beschriebene Bereitstellung eines keramischen Substrats - zum Schutz des Sensorelements. In diesem Fall kann das Sensorelement in Form von Dünnschicht-Leitern durch Sputtern oder Siebdruck auf der Außenfläche des ersten Rohrabschnitts aufgebracht werden. Schließlich besteht die Option, das Sensorelement direkt auf die Außenfläche aufzudrucken, beispielsweise mittels Inkjet-Verfahren oder mittels Laserstrukturierung. Dabei wird ein Messgitter auf der Außenfläche erzeugt, welches wie zuvor beschrieben eine spezifische Anordnung des Sensorelements ermöglicht. Diese Anordnungsmöglichkeiten sind allesamt derart angepasst, dass die Detektion einer Querschnittsveränderung des ersten Rohrabschnitts durch die erste Messvorrichtung nicht negativ beeinträchtigt wird.

Gemäß einer weiteren Ausführungsform des erfindungsgemäßen Messsystems kann die erste Messvorrichtung einen Beschleunigungssensor umfassen, welcher dazu eingerichtet ist, im ersten Rohrabschnitt auftretende Druckpulsationen zu detektieren. Der Beschleunigungssensor ist insbesondere dazu vorgesehen, dreidimensionale Beschleunigungsdaten zu erfassen, um innerhalb eines sich dehnenden ersten Rohrabschnitts Aussagen über dynamische Druckpulsationen treffen zu können. Die durch die erste Messvorrichtung bestimmten Dehnungsparameter können durch Beschleunigungsparameter, welche von dem Beschleunigungssensor bestimmt worden sind, dynamisch verstärkt aufgelöst werden, um insbesondere Druckspitzen mit höherer Präzision zu erfassen.

Ferner dient der Beschleunigungssensor dazu, zwischen realen Querschnittsveränderungen des ersten Rohrabschnitts und extern verursachten Bewegungen, beispielsweise Schwingungen, Stößen oder Pumpenresonanzen, welche allesamt nicht auf eine Querschnittsvergrößerung des ersten Rohrabschnitts zurückzuführen sind, unterscheiden zu können. Der Beschleunigungssensor ermöglicht eine Echtzeit-Analyse der Umgebungsdynamik des ersten Rohrabschnitts und ermöglicht die Differenzierung zwischen druckinduzierten und mechanisch-induzierten Deformationen.

Optional kann die erste Messvorrichtung eine Temperaturkompensationseinheit umfassen, wobei die Temperaturkompensationseinheit dazu eingerichtet ist, eine Temperatur des ersten Rohrabschnitts zu detektieren. Die Temperaturkompensationseinheit dient insbesondere dazu, thermisch bedingte Längenausdehnungen des ersten Rohrabschnitts sowie eine Temperatur der Außenfläche des ersten Rohrabschnitts zu ermitteln, um anhand der gewonnenen Daten eine temperaturspezifische Korrektur der durch die erste Messvorrichtung ermittelten Dehnungsparameter durchzuführen. Eine derartige Temperaturkompensation ist vorteilhaft, da die Detektion von Querschnittsveränderungen durch einen DMS temperatursensitiv ist. Hierfür kann die Temperaturkompensationseinheit ferner dazu eingerichtet sein, die Temperatur des Sensorelements zu detektieren und zu überwachen. Sollte die Temperatur des ersten Rohrabschnitts und/oder des Sensorelements außerhalb eines vorbestimmten Temperatur-Schwellenwertes liegen, so kann diese über ein Heiz- oder Kühlelement reguliert werden, um möglichst konstante Temperaturbedingungen an der Außenfläche des ersten Rohrabschnitts zu gewährleisten.

Die Temperaturkompensationseinheit leitet die detektierten Temperaturen des ersten Rohrabschnitts und gegebenenfalls des Sensorelements optional an eine im weiteren Verlauf beschriebene Steuereinheit des Messsystems weiter. Besagte Steuereinheit führt daraufhin eine Temperaturkompensation der bestimmten Dehnungsparameter vor, indem allgemein bekannte Korrekturformeln oder Lookup-Tabellen herangezogen werden, welche Materialkoeffizienten, insbesondere einen thermischen Längenausdehnungskoeffizient, des ersten Rohrabschnitts berücksichtigen.

Gemäß einer optionalen Ausführungsform des erfindungsgemäßen Messsystems kann die erste Messvorrichtung mittels einer feuchtigkeits- und temperaturbeständigen Folie an dem ersten Rohrabschnitt angeordnet sein. Diese Folie dient insbesondere zum Schutz sowie zur verbesserten Anhaftung der ersten Messvorrichtung an der Außenfläche des ersten Rohrabschnitts. Ferner wird durch die Folie die Anordnung der ersten Messvorrichtung vereinfacht, da insbesondere keine weitere Anpassung der Rohrabschnittoberfläche erforderlich ist.

Zum weiteren Schutz kann die erste Messvorrichtung des erfindungsgemäßen Messsystems in eine Vergussmasse eingebettet sein, um die jeweilige Messvorrichtung vor externen Einflüssen zu schützen und dessen thermische Stabilität zu gewährleisten. Außerdem ist die Messvorrichtung aufgrund der Einbettung in die Vergussmasse wasserdicht und kann somit unter Wasser eingesetzt werden. Bei der Vergussmasse kann es sich beispielsweise um Epoxidharz, Polyurethan, Silikonelastomer oder eine anderweitige geeignete fließfähige Masse handeln. Zusätzlich oder alternativ zu der Einbettung in einer Vergussmasse kann die jeweilige Messvorrichtung mit einem Gehäuse ausgebildet sein, welches die Messvorrichtung vor dem Eindringen von Flüssigkeiten oder Staub schützt.

Zusätzlich oder alternativ zur Anordnung der ersten Messvorrichtung mittels einer feuchtigkeits- und temperaturbeständigen Folie kann die erste Messvorrichtung mittels einer Klemmeinheit an dem ersten Rohrabschnitt angeordnet sein. Die Klemmeinheit ist dazu eingerichtet, den ersten Rohrabschnitt formschlüssig zu umschließen und somit den direkten Kontakt mit der Außenfläche des ersten Rohrabschnitts zu gewährleisten. Die Klemmeinheit kann zwei formschlüssige Schalenelemente umfassen, beispielsweise Halbschalen, Spannringe oder Clips, welche die Rohrleitung konzentrisch umschließen. Das Sensorelement kann entweder direkt in die Klemmeinheit integriert sein oder über eine definierte Kontaktstruktur mechanisch mit der Außenfläche des ersten Rohrabschnitts gekoppelt sein. Die durch einen Innendruck verursachte Querschnittsveränderung des ersten Rohrabschnitts der Rohrleitung wird über die Klemmeinheit auf das Sensorelement übertragen. Eine optimale Kopplung des Sensorelements kann dabei durch eine kontrollierte Vorspannung sichergestellt werden. Ferner können materialspezifische Eigenschaften der Klemmeinheit in die Bestimmung der Dehnungsparameter miteinfließen.

Die Anordnung der ersten Messvorrichtung mittels einer Klemmeinheit ist insbesondere geeignet für Anwendungen, bei welche ein Verkleben des Sensorelements nicht praktikabel oder zulässig ist, beispielsweise bei flexiblen Kunststoffrohren oder Silikonschläuchen. Ferner ist diese Anordnungsmöglichkeit vorteilhaft bei Anwendungen, welche eine zerstörungsfreie Montage und Demontage der ersten Messvorrichtung ohne Eingriff in die Rohrleitung voraussetzt. Sie eignet sich daher insbesondere für temporäre Messungen, bei Anwendungen im Hygienebereich oder in Anlagen mit häufig auszutauschenden Rohrabschnitten bzw. wechselnden Konfigurationen.

Optional kann das Sensorelement der ersten Messvorrichtung dazu eingerichtet sein, Querschnittsveränderung des ersten Rohrabschnitts über einen zeitlichen Verlauf zu detektieren, um relative Abweichungen in Bezug auf eine vordefinierte Querschnittsveränderung des ersten Rohrabschnitts zu bestimmen. Mit anderen Worten können die auf den Querschnittsveränderungen bzw. Dehnungen des ersten Rohrabschnitts basierenden Dehnungsparameter über einen beliebigen Zeitraum bestimmt und mit Referenzwerten verglichen werden, um mögliche Anomalien zu detektieren. Dies ermöglicht eine Überwachung der Rohrleitung während dessen Betriebs. Die Referenzwerte können sich dabei auf Werte beziehen, welche zuvor für den ersten Rohrabschnitt unter Standardbedingungen ermittelt worden sind.

Unter Einbezug der Referenzwerte, insbesondere der materialspezifischen Eigenschaften der Rohrleitung sowie der Art bzw. Zusammensetzung und des Volumenstroms des zu transportierenden Mediums, wird bei Überschreitung des zuvor erwähnten materialspezifischen Schwellenwertes eine entsprechende Querschnittsvergrößerung des ersten Rohrabschnitts erwartet, wodurch eine für den ersten Rohrabschnitt spezifische Dehnungsrate abgeleitet werden kann. Abweichungen von dieser bekannten Dehnungsrate während des Betriebs der Rohrleitung deuten daher auf Anomalien hin, beispielsweise bedingt durch eine Materialermüdung oder Rissbildung im ersten Rohrabschnitt.

Anhand der Bestimmung der Dehnungsparameter über einen zeitlichen Verlauf können ferner Prognosen zur Lebensdauer des ersten Rohrabschnitts und somit zur Rohrleitung erstellt werden. So wird es insbesondere ermöglicht, Materialermüdung, Risse oder Brüche des ersten Rohrabschnitts aufgrund andauernder mechanischer Belastung vorherzusagen und den ersten Rohrabschnitt entsprechend rechtzeitig zu warten oder auszutauschen. Dadurch kann insbesondere verhindert werden, dass ein Defekt des ersten Rohrabschnitts während des Betriebs der Rohrleitung auftritt.

Gemäß einer optionalen Ausführungsform des erfindungsgemäßen Messsystems kann die erste Messvorrichtung ferner eine Verarbeitungseinheit zur Verarbeitung von Dehnungsparametern, welche durch die erste Messvorrichtung bestimmt worden sind, eine Speichereinheit, welche dazu eingerichtet ist, die Dehnungsparameter abzuspeichern, und eine Kommunikationseinheit zum, insbesondere drahtlosen, Übertragen der Dehnungsparameter an eine externe Steuereinheit umfassen. Insbesondere kann die erste Messvorrichtung mit einem Prozessor ausgebildet sein, welcher die Verarbeitungseinheit, die Speichereinheit und die Kommunikationseinheit umfasst.

Die von der ersten Messvorrichtung bestimmten Dehnungsparameter können im Anschluss an deren Verarbeitung entweder ereignisbasiert oder zyklisch, d.h. in bestimmten Zeitintervallen, an eine externe Steuereinheit des Messsystems übertragen werden, beispielsweise ein PC, ein Smartphone oder ein Tablet, auf welchem sie ein Benutzer einsehen kann. Die externe Steuereinheit kann ferner dazu eingerichtet sein, Steuerbefehle an die erste Messvorrichtung zu übermitteln. Die aus dem Kalibrierungsvorgang, der Vorab-Analyse und der Temperaturkompensation gewonnen Daten können in diesem Zusammenhang automatisch durch den Prozessor der ersten Messvorrichtung oder durch die externe Steuereinheit verarbeitet werden.

Ferner kann die externe Steuereinheit bei Verwendung eine Mehrzahl erster Messvorrichtungen an der Rohrleitung eine Synchronisierung der Messvorrichtung vornehmen. Dadurch kann die Datenerfassung der Messvorrichtungen über vorbestimmte Messintervalle zeitgleich ablaufen, sodass Anomalien, welche von den Messvorrichtungen detektiert werden, präzise zugeordnet werden können. Solche Anomalien betreffen beispielsweise Druckabfälle, Turbulenzen sowie Systemengpässe oder Verschmutzungen im Inneren des ersten Rohrabschnitts. Das Synchronisieren der Datenerfassung vereinfacht ferner auch die nachgelagerte Analyse der über einen längeren Zeitraum bestimmten Dehnungsparameter des ersten Rohrabschnitts. Sämtliche Datenübertragungen erfolgen dabei vorzugsweise drahtlos, beispielsweise via Bluetooth oder über WLAN. Zusätzlich können die ermittelten Dehnungsparameter sowie sämtliche damit assoziierten Daten an eine Cloud bzw. einen entfernten Server übertragen werden.

Die detektierten Querschnittsveränderungen des ersten Rohrabschnitts können durch das Messsystem, insbesondere durch die externe Steuereinheit des Messsystems, mittels Fast-Fourier-Transformation (FFT) und/oder Rainflow-Zählung verarbeitet werden. Die Anwendung von FFT ermöglicht unter anderem eine Frequenzanalyse von Druckpulsationen, während Rainflow-Zählung zur Ermüdungsanalyse der Rohrleitung dient.

Gemäß einer bevorzugten Ausführungsform des erfindungsgemäßen Messsystems kann das Messsystem ferner eine zweite Messvorrichtung umfassen, welche an einer Außenfläche eines zweiten Rohrabschnitts der Rohrleitung angeordnet ist, wobei der zweite Rohrabschnitt benachbart und stromabwärts zu einem gekrümmten Rohrabschnitt der Rohrleitung ausgebildet ist, und wobei die zweite Messvorrichtung dazu eingerichtet ist, Querschnittsveränderungen des zweiten Rohrabschnitts zu detektieren, welche durch einen Strömungswechsel im Inneren des zweiten Rohrabschnitts erzeugt worden sind.

Die zweite Messvorrichtung dient aufgrund ihrer Anordnung an dem zeiten Rohrabschnitt unmittelbar stromabwärts des gekrümmten Rohrabschnitts der Detektion von Strömungszuständen. Sie detektiert insbesondere Strömungswechsel von laminarer zu nichtstationär turbulenter Strömung sowie Druckpulsationen, welche auf asymmetrische Strömungsprofile oder abrupte Strömungsabrisse hinweisen können. Derartige Anomalien treten häufig bei Ablagerungen oder bei Ablösung von Feststoffen auf, welche sich in einem Rohrabschnitt angesammelt haben. Die Ansammlung von Feststoffen ist in der Regel unerwünscht, da sie den Strömungsverlauf in der Rohrleitung beeinträchtigt. Durch Auswertung der durch die zweite Messvorrichtung bestimmten Dehnungsparameter können solche unerwünschten Ablagerungen oder Ablösungen im Inneren der Rohrleitung erkannt werden.

An dieser Stelle sei angemerkt, dass die zweite Messvorrichtung insbesondere baugleich und hinsichtlich ihrer Funktionalität identisch zu der ersten Messvorrichtung sein kann. Dementsprechend sind sämtliche Prinzipien, welche zuvor für die erste Messvorrichtung an sich sowie für die erste Messvorrichtung im Zusammenhang mit dem ersten Rohrabschnitt erläutert worden sind, auch auf die zweite Messvorrichtung bzw. auf die zweite Messvorrichtung im Zusammenhang mit dem zweiten Rohrabschnitt anwendbar. Die zweite Messvorrichtung kann außerdem stromabwärts benachbart zu gekrümmten Abschnitten von Rohrbögen, Abzweigungen, Ventilen, Verteilerstellen, Einlässen bzw. Auslässen von Pumpenanlagen sowie von Ein- oder Ausgängen von Filtrations- oder Wärmetauscheranlagen der Rohrleitung angeordnet werden. Um die Auswertung der durch die erste und die zweite Messvorrichtung bestimmten Dehnungsparameter zu vereinfachen, können die Messvorrichtungen ferner synchronisiert sein.

Optional ist die erste und/oder zweite Messvorrichtung des erfindungsgemäßen Messsystems energieautark, d.h. sie versorgt sich eigenständig mit der für ihren Betrieb benötigten Energie. Daher kann die jeweilige Messvorrichtung Mittel zur autarken Energieversorgung aufweisen. Solche Mittel werden allgemein als Energy-Harvesting-Vorrichtungen bezeichnet. Die Mittel zur autarken Energieversorgung können unmittelbar auf dem ersten und/oder dem zweiten Rohrabschnitt angeordnet sein. Diese Mittel zur autarken Energieversorgung liefern der Messvorrichtung Energie in Form von Strom, um dessen dauerhaften Betrieb zu gewährleisten. Dazu nutzen die Mittel zur autarken Energieversorgung insbesondere piezoelektrische, elektromagnetische oder triboelektrische Prinzipien, um Energie aus den Dehnungen des jeweiligen Rohrabschnitts zu gewinnen. Zusätzlich oder alternativ kann die Messvorrichtung eine Batterie und/oder eine externe Energieversorgung aufweisen. Im Falle der Verwendung einer Batterie kann diese durch die von den Mitteln zur autarken Energieversorgung bereitgestellten Energie aufgeladen werden.

Gemäß einer weiteren Ausführungsform des erfindungsgemäßen Messsystems kann das Messsystem ferner eine Pumpe mit einer Saugseite und einer Druckseite, wenigstens ein Ventil, welches in der Rohrleitung (12) stromaufwärts und/oder stromabwärts der Pumpe angeordnet ist, eine dritte Messvorrichtung, welche dazu eingerichtet ist, den Druck sowohl an der Saugseite als auch an der Druckseite der Pumpe zu erfassen, und eine Steuereinheit umfassen, welche mit der dritten Messvorrichtung und dem wenigstens einen Ventil sowie der Pumpe gekoppelt ist und derart ausgebildet ist, dass sie auf Basis des von der dritten Messvorrichtung erfassten Drucks eine druckabhängige Steuerung der Pumpe und/oder des wenigstens einen Ventils durchführt, wobei die dritte Messvorrichtung ferner dazu eingerichtet ist, Druckpulsationen und Druckverläufe in Echtzeit zu überwachen und zu steuern.

Anhand der dritten Messvorrichtung, welche insbesondere baugleich und die gleiche Funktionsweise wie die erste und die zweite Messvorrichtung aufweisen kann, und der Steuereinheit können Druckentwicklungen sowie Druckpulsationen an Ventilen und Pumpen der Rohrleitung überwacht und entsprechend gesteuert werden, um einen Volumenstrom eines Mediums in der Rohrleitung anzupassen. Von hoher Relevanz ist dabei die Überwachung des Druckverhältnisses zwischen Saug- und Druckseite der Pumpe, da dieses maßgeblich zur Effizienz und damit zur Funktionsfähigkeit der gesamten Rohrleitung beiträgt. Ventile spielen in diesem Zusammenhang ebenso eine zentrale Rolle, da sie die Steuerung und Regelung der Druckverhältnisse vor und nach dem Pumpwerk ermöglichen.

Insbesondere sind Pumpenanlagen betroffen, bei denen es aufgrund unzureichender Dichtung zwischen Saug- und Druckseite zu starker Leckage oder Rückfluss kommt. Daher kann die dritte Messvorrichtung ferner dazu eingerichtet sein, Leckage- oder Rückflusseffekte infolge unzureichender Dichtung zwischen Saug- und Druckseite der Pumpe zu detektieren und durch entsprechende Steuerung mittels der Steuereinheit zu kompensieren.

Da die Leistungsfähigkeit einer Pumpe stark von der Viskosität des Fördermediums sowie vom Luftanteil im Medium und pulsierenden Strömungszuständen abhängt, kann die dritte Messvorrichtung dazu eingerichtet sein, diese Parameter bei der Erfassung von Druckentwicklungen sowie Druckpulsationen zu berücksichtigen und an die Steuereinheit weiterzugeben, so dass die Steuerung der Pumpe und/oder des Ventils hinsichtlich Viskosität, Luftgehalt und pulsierender Strömungszustände des Mediums anpassbar ist. Insgesamt kann somit ein stabiler, effizienter und störungsfreier Betrieb der Rohrleitung gewährleistet werden.

Das erfindungsgemäße Messsystem bietet eine Echtzeitüberwachung und Visualisierung der Dehnungsparameter, optional als Langzeitauswertung, zur Zustandsüberwachung einer Rohrleitung. Ferner wird eine umfängliche dreidimensionale Dehnungsanalyse mittels systemintegrierter Datenverarbeitung mit drahtloser Übertragung bereitgestellt. Das Messsystem ermöglicht eine Innendruckmessung ohne direkten Kontakt zum transportierten Medium, wobei die Umwandlung der bestimmten Dehnungsparameter in reale Innendrücke insbesondere durch Kalibrierung der beteiligten Messvorrichtungen realisiert wird.

Alarme bei kritischen Abweichungen von vordefinierten Innendruck-Schwellenwerten, insbesondere bei Druckverlusten oder Verstopfungen, unterstützen die frühzeitige Fehlerbehebung und tragen so zur Effizienzsteigerung bei Anwendungen jeglicher Art bei. Die bestimmten Dehnungsparameter können über eine webbasierte Schnittstelle ausgelesen werden und die Vernetzung der verwendeten Messvorrichtungen erlaubt systemumfassende Diagnosen sowie Prognosen zum Wartungsbedarf oder Fehlerereignissen.

Gemäß einem zweiten Aspekt der vorliegenden Erfindung wird die oben genannte Aufgabe durch ein Verfahren zum Steuern eines Innendrucks einer Rohrleitung gelöst, wobei das Verfahren die Schritte umfasst: a) Anbringen einer ersten Messvorrichtung an einer Außenfläche eines ersten Rohrabschnitts einer Rohrleitung, wobei die erste Messvorrichtung wenigstens ein Sensorelement und eine mit dem Sensorelement elektrisch gekoppelte Leiterplatte umfasst; b) Detektieren einer druckinduzierten Querschnittsveränderung des ersten Rohrabschnitts durch das Sensorelement der ersten Messvorrichtung; c) Erzeugen erster Dehnungsparameter, welche auf die detektierte Querschnittsveränderung des ersten Rohrabschnitts bezogen sind, durch eine Verarbeitungseinheit der ersten Messvorrichtung; d) Umwandeln der ersten Dehnungsparameter in Druckwerte auf Grundlage materialspezifischer Eigenschaften des ersten Rohrabschnitts; e) Übertragen der Druckwerte an eine Steuereinheit durch eine Kommunikationseinheit der Messvorrichtung; und f) Steuern eines Volumenstroms eines in der Rohrleitung transportierten Mediums mittels der Steuereinheit in Abhängigkeit der Druckwerte.

Das Verfahren gemäß dem zweiten Aspekt ist insbesondere darauf ausgelegt, einen Volumenstrom einer Rohrleitung in Abhängigkeit der entsprechend den Ausführungen zum Messsystems des ersten Aspekts ermittelten Innendruckwerten zu steuern. Dies kann beispielsweise geschehen, indem ein an der Rohrleitung ausgebildetes Ventil angesteuert wird, welches den Volumenstrom der Rohrleitung regelt. Sollte der Innendruck des ersten Rohrabschnitts über einen vordefinierten Schwellenwert ansteigen, so kann der Volumenstrom entsprechend reduziert werden, um Beschädigungen an der Rohrleitung zu vermeiden. Falls kein Innendruck oder nur ein minimaler Innendruck des ersten Rohrabschnitts ermittelt wird, kann der Volumenstrom hingegen erhöht werden, um die Transportgeschwindigkeit des Mediums in der Rohrleitung zu steigern.

Es sei an dieser Stelle explizit darauf hingewiesen, dass sämtliche in Bezug auf das erfindungsgemäße Messsystem des ersten Aspekts beschriebenen Merkmale, Effekte und Vorteile auch auf das erfindungsgemäße Verfahren gemäß dem zweiten Aspekt anwendbar sein können, und umgekehrt.

Insbesondere kann das Verfahren ferner die folgenden Schritte umfassen: g) Anordnen einer zweiten Messvorrichtung an einer Außenfläche eines zweiten Rohrabschnitts der Rohrleitung, wobei der zweite Rohrabschnitt benachbart und stromabwärts zu einem gekrümmten Rohrabschnitt der Rohrleitung ausgebildet ist, und h) Durchführen der Schritte b) bis d) mittels der zweiten Messvorrichtung, um zweite Dehnungsparameter zu erzeugen und diese mit den ersten Dehnungsparametern zur Umwandlung in Druckwerte zu kombinieren, wobei die zweite Messvorrichtung dazu eingerichtet ist, druckinduzierte Querschnittsveränderungen des zweiten Rohrabschnitts zu detektieren, welche durch einen Strömungswechsel im Inneren des zweiten Rohrabschnitts erzeugt werden.

Die zweiten Dehnungsparameter können hierbei analog zu den ersten Dehnungsparametern bestimmt werden. Das Steuern des Volumenstroms gemäß Schritt f) erfolgt in diesem Fall anhand der Kombination aus ersten und zweiten Dehnungsparametern. Dabei kann durch die Steuereinheit beispielsweise eine Ventil-Steuervorrichtung angesteuert werden, welche zur Steuerung des Volumenstroms des zu transportierenden Mediums unmittelbar mit einem Ventil der Rohrleitung gekoppelt ist.

Im Folgenden wird das erfindungsgemäße Messsystem in größerem Detail anhand von Ausführungsbeispielen mit Bezug auf die begleitenden Zeichnungen beschrieben. Es stellt dar:
- Figur 1: eine Detailansicht eines ersten Ausführungsbeispiels eines erfindungsgemäßen Messsystems, umfassend eine erste Messvorrichtung;
- Figur 2: eine perspektivische Ansicht des Messsystems des ersten Ausführungsbeispiels, umfassend eine erste und eine zweite Messvorrichtung; und
- Figur 3: eine perspektivische Ansicht eines zweiten Ausführungsbeispiels eines erfindungsgemäßen Messsystems, umfassend eine erste und eine zweite Messvorrichtung.

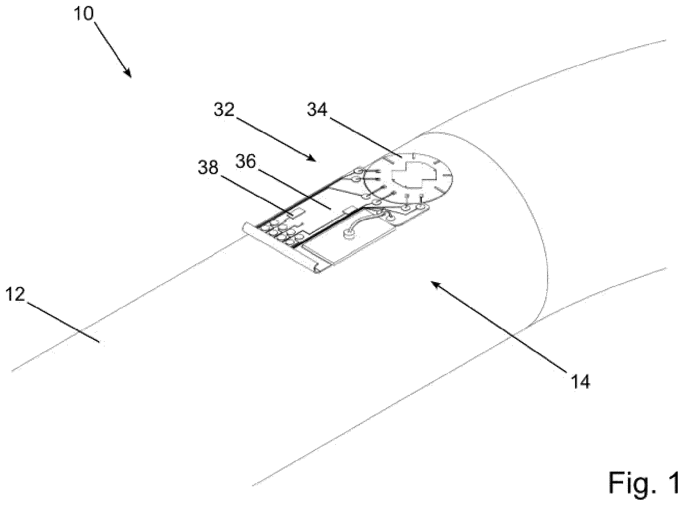

In Figur 1 ist in einer Detailansicht ein erstes Ausführungsbeispiel eines erfindungsgemäßen Messsystems 10 zur Bestimmung eines Innendrucks einer Rohrleitung 12 gezeigt. Die Rohrleitung 12 ist zum Transport eines Mediums eingerichtet, beispielsweise eines Fluids oder eines Feststoffs, und umfasst eine beliebige Anzahl an Rohrabschnitten. Vorliegend weist die zylindrische Rohrleitung 12 einen ersten Rohrabschnitt 14 auf. An der Außenfläche des ersten Rohrabschnitts 14 ist eine erste Messvorrichtung 32 angeordnet. Im gezeigten ersten Ausführungsbeispiel ist die erste Messvorrichtung 32 unmittelbar auf die Außenfläche des ersten Rohrabschnitts 14 aufgeklebt, wobei auch andere Anbringungsmöglichkeiten denkbar sind.

Die erste Messvorrichtung 32 umfasst wenigstens ein Sensorelement 34, eine mit dem Sensorelement 34 elektrisch gekoppelte Leiterplatte 36 sowie einen Beschleunigungssensor 38. Die Leiterplatte 36 weist unter anderem mehrere Messbrücken, Signal- bzw. Messverstärker, einen Analog-Digital-Wandler sowie einen Mikroprozessor auf, welcher als Verarbeitungseinheit, Speichereinheit und Kommunikationseinheit fungiert.

Zur Energieversorgung kann die erste Messvorrichtung 32 mit einer hier nicht dargestellten Batterie ausgestattet sein. Alternativ oder zusätzlich kann die erste Messvorrichtung 32 auch kabelgebunden mit Strom versorgt werden und/oder mittels eigener Energy-Harvesting-Vorrichtungen selbst Strom erzeugen. Ferner können die einzelnen elektronischen Komponenten, insbesondere das Sensorelement 34 und die Leiterplatte 36, über flexible Verbindungselemente, beispielsweise Kabel, miteinander verbunden sein, um eine flexible Anordnung des Sensorelements 34 an der Außenfläche des ersten Rohrabschnitts 14 zu ermöglichen.

Das Sensorelement 34 ist vorliegend, wie in Figur 1 gezeigt, als sogenannte DMS-Rosette ausgebildet, in welcher mehrere DMS, vorzugsweise drei DMS, in Bezug auf ein Zentrum der DMS-Rosette derart zueinander angeordnet sind, dass jeweils zwei benachbarte DMS einen Winkel zwischen 0° und 180° aufspannen. Jeder DMS erfasst die entlang seiner Haupterstreckungsrichtung auftretenden Dehnungen bzw. Querschnittsveränderungen des ersten Rohrabschnitts 14 in unterschiedlichen Richtungen. Folglich können je nach Anordnung der DMS in der DMS-Rosette Dehnungen in verschiedenen Richtungen erfasst und ausgewertet werden.

Wird nun ein Medium, beispielsweise Warmwasser, durch die Rohrleitung 12 transportiert, so entsteht aufgrund des in der Rohrleitung 12 vorherrschendem Volumenstroms des Mediums ein spezifischer Innendruck, welcher senkrecht auf die Rohrinnenwand des ersten Rohrabschnitts 14 wirkt. Solange dieser Innendruck unter einem materialspezifischen Schwellenwert des ersten Rohrabschnitts 14 liegt, erfährt der erste Rohrabschnitt 14 keine Zustandsveränderung. Besagter materialspezifischer Schwellenwert hängt insbesondere von dem Innendurchmesser bzw. Innenradius und der Wandstärke des ersten Rohrabschnitts 14 sowie des Elastizitätsmoduls des Materials des ersten Rohrabschnitts 14 ab.

Bei erhöhtem Volumenstrom des Mediums wirkt folglich auch ein erhöhter Innendruck auf die Rohrinnenwand des ersten Rohrabschnitts 14. Überschreitet dieser Innendruck nun den materialspezifischen Schwellenwert des ersten Rohrabschnitts 14, so wird eine Querschnittsveränderung in Form einer Umfangsdehnung des ersten Rohrabschnitts 14 erzeugt, welche proportional zum Innendruck ist. Für einen geraden ersten Rohrabschnitt 14 mit gleichmäßiger Wandstärke wirkt sich der erzeugte Innendruck gleichmäßig auf das Querschnittsprofil des Rohrabschnitts 14 aus.

Eine Dehnung des ersten Rohrabschnitts 14 wird folglich von der ersten Messvorrichtung 32 an der Außenfläche des ersten Rohrabschnitts 14 erfasst und durch den Mikroprozessor in Dehnungsparameter umgewandelt. Mittels einer vordefinierten Kalibrierung der ersten Messvorrichtung 32 können ausgehend von den bestimmten Dehnungsparametern Innendruckwerte des ersten Rohrabschnitts 14 abgeleitet werden. Die erste Messvorrichtung 32 des Messsystems 10 ist somit dazu in der Lage, Querschnittsveränderung des ersten Rohrabschnitts 14 zu detektieren, wodurch wiederum der Innendruck des ersten Rohrabschnitts 14 indirekt bestimmt werden kann.

Die Kalibrierung der ersten Messvorrichtung 32 umfasst einen oder mehrere Drucktests, bei welchen vordefinierte Innendrücke an dem ersten Rohrabschnitt 14 erzeugt werden. Anhand der aus den bekannten Innendrücken resultierenden Umfangsdehnungen wird die erste Messvorrichtung 32 kalibriert. Während des Betriebs der Rohrleitung 12, d.h. dem Transport eines Mediums durch die Rohrleitung 12, können nun durch die erste Messvorrichtung 32 bestimmte Dehnungsparameter anhand der Kalibrierung in konkrete Innendruckwerte umgewandelt werden.

Umfangsdehnungen eines zylindrischen ersten Rohrabschnitts 14 können ferner anhand folgender Gleichung abgeschätzt werden: $ε = \frac{p ⋅ r}{t ⋅ E}$ wobei ε der als Strain bzw. Microstrain durch die erste Messvorrichtung 32 detektierten Umfangsdehnung entspricht, p der Innendruck, r der Innenradius des ersten Rohrabschnitts 14, t die Wandstärke des ersten Rohrabschnitts 14 und E das Elastizitätsmodul des ersten Rohrabschnitts 14 ist. Beispielhaft sei an dieser Stelle die Dehnungsberechnung eines Edelstahlrohres mit Elastizitätsmodul E = 200 GPa, einer Wandstärke von 1 mm und einer Nennweite DN10 angeführt. Für einen Innendruck von 1 bar wird bei diesen Konditionen eine Umfangsdehnung von 1,67 Microstrain erreicht. Durch Auflösung der obigen Gleichung nach p kann folglich anhand der von der ersten Messvorrichtung 32 detektierten Dehnungen bzw. Querschnittsveränderungen des ersten Rohrabschnitts 14 der Innendruck p bestimmt werden.

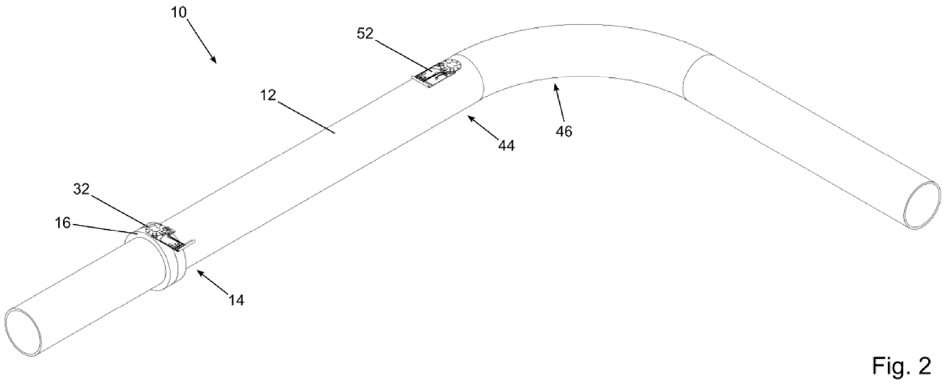

Figur 2 zeigt eine perspektivische Ansicht des Messsystems des ersten Ausführungsbeispiels, umfassend eine erste und eine zweite Messvorrichtung 32, 52. Die zweite Messvorrichtung 52 ist insbesondere baugleich und weist die gleichen Funktionen wie die erste Messvorrichtung 32 auf, weshalb hinsichtlich der zweiten Messvorrichtung 52 auf die Ausführungen zur ersten Messvorrichtung 32 verwiesen wird.

Im Unterschied zur Figur 1 ist die erste Messvorrichtung 32 in Figur 2 mittels einer Klemmeinheit 16, welche vorliegend als Spannring ausgebildet ist, an der Außenfläche des ersten Rohrabschnitts 14 angeordnet. Die Klemmeinheit 16 ermöglicht ein einfaches Anbringen und Lösen der ersten Messvorrichtung 32 an den bzw. von dem ersten Rohrabschnitt 14. Bei der Bestimmung der Innendrucks des ersten Rohrabschnitts 14 werden die materialspezifischen Eigenschaften der Klemmeinheit berücksichtig, d.h. insbesondere deren Material, Ausgestaltung, Dimensionierung und Elastizitätsmodul.

Die zweite Messvorrichtung 52 ist an einer Außenfläche eines zweiten Rohrabschnitts 44 der Rohrleitung 12 angeordnet. Dieser zweite Rohrabschnitt 44 ist benachbart und stromabwärts zu einem gekrümmten Rohrabschnitt 46 der Rohrleitung 12 ausgebildet. Bei dem gekrümmten Rohrabschnitt 46 handelt es sich in dem vorliegenden ersten Ausführungsbeispiel um einen Rohrbogen. Es ist jedoch ebenso denkbar, dass ein derartiger gekrümmter Abschnitt 46 an einem Ventil oder anderweitigen Komponenten der Rohrleitung 12 ausgebildet ist.

Während des Transports des Mediums durch die Rohrleitung 12 können sich unerwünschte Ablagerungen im gekrümmten Abschnitt 46, insbesondere an kleinen Vorsprüngen innerhalb des gekrümmten Abschnitts 46 oder am Übergang zwischen zwei Rohrabschnitten 44, 46, bilden. Solche Ablagerungen bestehen meist aus Feststoffen, beispielsweise feinkörnigen Partikeln, welche im transportierten Medium enthalten sind. Die Bildung einer Ablagerung verläuft dynamisch und oftmals über einen gewissen Zeitraum hinweg, wobei das Strömungsprofil innerhalb der Rohrleitung 12 durch eine solche Ablagerung beeinträchtigt wird. Im Extremfall führt eine Ablagerung sogar zur vollständigen Verstopfung der Rohrleitung. Da Rohrleitungen oftmals nicht transparent sind, lässt sich die Bildung einer Ablagerung mit optischen Sensoren nicht der nur eingeschränkt detektieren.

Da jedoch der Volumenstrom des transportierten Mediums durch Ablagerungen und den damit einhergehenden Änderungen im Strömungsprofil beeinflusst wird, ändert sich folglich der Innendruck im unmittelbar stromabwärts zum gekrümmten Abschnitt 46 angeordneten zweiten Rohrabschnitt 44. Dementsprechend können die beschriebenen Ablagerungen durch Auffälligkeiten in den von der zweiten Messvorrichtung 52 bestimmten Dehnungsparametern detektiert werden. Insbesondere lassen Unterschiede in den Dehnungsparametern der ersten Messvorrichtung 32 und der zweiten Messvorrichtung 52 auf derartige Anomalien schließen.

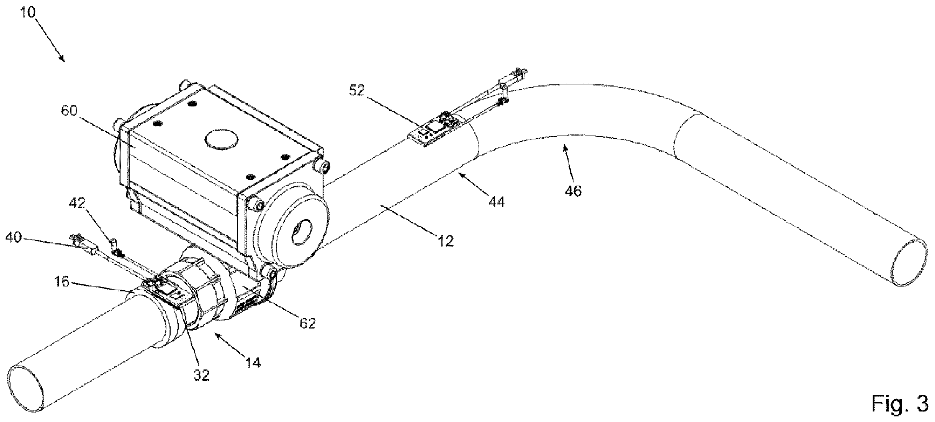

In Figur 3 ist schließlich eine perspektivische Ansicht eines zweiten Ausführungsbeispiels eines erfindungsgemäßen Messsystems 10 gezeigt. Das zweite Ausführungsbeispiel unterscheidet sich von dem ersten Ausführungsbeispiel durch die Ausbildung einer Ventil-Steuervorrichtung 60 und eines Ventils 62 im Bereich des ersten Rohrabschnitts 14. Für sämtliche weiteren Merkmale des zweiten Ausführungsbeispiels, welche identisch zu den Merkmalen des ersten Ausführungsbeispiels sind, wird an dieser Stelle auf die Ausführungen des ersten Ausführungsbeispiels verwiesen.

Die Ventil-Steuereinheit 60 sowie das damit gekoppelte Ventil 62 sind zur Steuerung des Volumenstroms in der Rohrleitung 12 eingerichtet. Wird nun anhand der durch die erste Messvorrichtung 32 und/oder die zweite Messvorrichtung 52 bestimmten Dehnungsparameter ein spezifischer Innendruck ermittelt, so kann der Volumenstrom innerhalb der Rohrleitung 12 entsprechend gesteuert, insbesondere erhöht oder reduziert werden, um den Innendruck in der Rohrleitung 12 auf einen gewünschten Wert zu regulieren.

Wie in Figur 3 ferner dargestellt ist, weisen die beiden Messvorrichtungen 32, 52 einen Anschluss 40 für eine externe Stromquelle, welcher optional mit einem Spannungsregler ausgestattet ist, und eine Antenne 42 zur Übertragung der bestimmten Dehnungsparameter an eine externe Steuereinheit (nicht dargestellt) auf. Die Antenne 42, welche beispielsweise als BLE-Antenne ausgebildet ist, kann Teil der Kommunikationseinheit der Leiterplatte 36 sein. Die erste und die zweite Messvorrichtung 32, 52 detektieren Querschnittsveränderungen des ersten bzw. des zweiten Rohrabschnitts 14, 44, welche über eine auf der Leiterplatte 36 integrierten Brückenverstärkerschaltung aufgenommen, mittels Analog-Digital-Wandlung digitalisiert und dabei in Dehnungsparameter umgewandelt werden. Die Übertragung der Dehnungsparameter an die externe Steuereinheit mittels der Kommunikationseinheit bzw. der Antenne 42 erfolgt daraufhin beispielsweise via Bluetooth, WLAN, LoRaWAN oder ähnlichen Kommunikationsstandards. Die externe Steuereinheit, welche die übertragenen Dehnungsparameter in Innendruckwerte umwandelt, kann schließlich Steuerbefehle an die Ventil-Steuereinheit 60 übertragen, um das Ventil 62 anzusteuern. Dies kann vollständig automatisch oder durch Mitwirken eines Benutzers zumindest teilautomatisiert ablaufen.

## Patentansprüche

1. Messsystem (10) zur Bestimmung eines Innendrucks einer Rohrleitung (12), wobei das Messsystem (10) umfasst:
- wenigstens eine Rohrleitung (12), welche zum Transport eines Mediums eingerichtet ist; und
- wenigstens eine erste Messvorrichtung (32), welche wenigstens ein Sensorelement (34) und eine mit dem Sensorelement (34) elektrisch gekoppelte Leiterplatte (36) umfasst,
wobei die erste Messvorrichtung (32) an einer Außenfläche eines ersten Rohrabschnitts (14) der Rohrleitung (12) angeordnet ist und dazu eingerichtet ist, eine Querschnittsveränderung des ersten Rohrabschnitts (14) zu detektieren, um auf Grundlage der detektierten Querschnittsveränderung einen Innendruck des ersten Rohrabschnitts (14) zu bestimmen.

2. Messsystem (10) nach Anspruch 1,
**dadurch gekennzeichnet, dass** die erste Messvorrichtung (32) anhand vordefinierter Druckwerte und auf Grundlage materialspezifischer Eigenschaften des ersten Rohrabschnitts (14) kalibriert ist.

3. Messsystem (10) nach einem der vorhergehenden Ansprüche,
**dadurch gekennzeichnet, dass** vor der Anbringung der ersten Messvorrichtung (32) an einer Außenfläche des ersten Rohrabschnitts (14) eine Analyse durchgeführt wird, um eine für die Anbringung der ersten Messvorrichtung (32) geeignete Position an der Rohrleitung (12) zu bestimmen.

4. Messsystem (10) nach einem der vorhergehenden Ansprüche,
**dadurch gekennzeichnet, dass** das Sensorelement (34) wenigstens einen Dehnungsmessstreifen umfasst.

5. Messsystem (10) nach einem der Ansprüche 1 bis 3,
**dadurch gekennzeichnet, dass** das Sensorelement (34) eine Mehrzahl von Dehnungsmessstreifen, vorzugsweise drei Dehnungsmessstreifen, umfasst,
wobei die Dehnungsmessstreifen der Mehrzahl von Dehnungsmessstreifen derart in dem Sensorelement (34) angeordnet sind, dass jeweils zwei benachbarte Dehnungsmessstreifen in Bezug auf deren Haupterstreckungsrichtungen einen Winkel zueinander aufspannen, um Querschnittsveränderungen des ersten Rohrabschnitts (14) in voneinander unterschiedlichen Richtungen gemäß den Haupterstreckungsrichtungen der Dehnungsmessstreifen zu detektieren.

6. Messsystem (10) nach einem der vorhergehenden Ansprüche,
**dadurch gekennzeichnet, dass** das Sensorelement (34) zur Anordnung auf der Außenfläche des ersten Rohrabschnitts (14):
- als Folie ausgebildet ist;
- mit einem keramischen Substrat beschichtet ist;
- metallisiert und in eine Glasschicht eingebettet ist; oder
- direkt auf die Außenfläche aufgedruckt ist.

7. Messsystem (10) nach einem der vorhergehenden Ansprüche,
**dadurch gekennzeichnet, dass** die erste Messvorrichtung (32) einen Beschleunigungssensor umfasst, welcher dazu eingerichtet ist, im ersten Rohrabschnitt (14) auftretende Druckpulsationen zu detektieren.

8. Messsystem (10) nach einem der vorhergehenden Ansprüche,
**dadurch gekennzeichnet, dass** die erste Messvorrichtung (32) eine Temperaturkompensationseinheit umfasst,
wobei die Temperaturkompensationseinheit dazu eingerichtet ist, eine Temperatur des ersten Rohrabschnitts (14) zu detektieren.

9. Messsystem (10) nach einem der vorhergehenden Ansprüche,
**dadurch gekennzeichnet, dass** die erste Messvorrichtung (32) mittels einer Klemmeinheit (16) an dem ersten Rohrabschnitt (14) angeordnet ist.

10. Messsystem (10) nach einem der vorhergehenden Ansprüche,
**dadurch gekennzeichnet, dass** das Sensorelement (34) dazu eingerichtet ist, Querschnittsveränderungen des ersten Rohrabschnitts (14) über einen zeitlichen Verlauf zu detektieren, um relative Abweichungen in Bezug auf eine vordefinierte Dehnungsrate zu bestimmen.

11. Messsystem (10) nach einem der vorhergehenden Ansprüche,
**dadurch gekennzeichnet, dass** die erste Messvorrichtung (32) ferner umfasst:
- eine Verarbeitungseinheit zur Verarbeitung von Dehnungsparametern, welche durch die erste Messvorrichtung (32) bestimmt worden sind;
- eine Speichereinheit, welche dazu eingerichtet ist, die bestimmten Dehnungsparameter abzuspeichern; und
- eine Kommunikationseinheit zum, insbesondere drahtlosen, Übertragen der Dehnungsparameter an eine externe Steuereinheit.

12. Messsystem (10) nach einem der vorhergehenden Ansprüche,
**dadurch gekennzeichnet, dass** das Messsystem (10) ferner eine zweite Messvorrichtung (52) umfasst, welche an einer Außenfläche eines zweiten Rohrabschnitts (44) der Rohrleitung (12) angeordnet ist, wobei der zweite Rohrabschnitt (44) benachbart und stromabwärts zu einem gekrümmten Rohrabschnitt (46) der Rohrleitung (12) ausgebildet ist, und wobei die zweite Messvorrichtung (52) dazu eingerichtet ist, Querschnittsveränderungen des zweiten Rohrabschnitts (44) zu detektieren, welche durch einen Strömungswechsel im Inneren des zweiten Rohrabschnitts (44) erzeugt worden sind.

13. Messsystem (10) nach einem der vorhergehenden Ansprüche,
**dadurch gekennzeichnet, dass** das Messsystem (10) ferner umfasst:
eine Pumpe mit einer Saugseite und einer Druckseite,
wenigstens ein Ventil, welches in der Rohrleitung (12) stromaufwärts und/oder stromabwärts der Pumpe angeordnet ist,
eine dritte Messvorrichtung, welche dazu eingerichtet ist, den Druck sowohl an der Saugseite als auch an der Druckseite der Pumpe zu erfassen, und
eine Steuereinheit, welche mit der dritten Messvorrichtung, dem wenigstens einen Ventil und der Pumpe gekoppelt ist und derart ausgebildet ist, dass sie auf Grundlage des von der dritten Messvorrichtung erfassten Drucks eine Steuerung der Pumpe und/oder des wenigstens einen Ventils durchführt,
wobei die dritte Messvorrichtung ferner dazu eingerichtet ist, Druckpulsationen und Druckverläufe in Echtzeit zu überwachen und zu steuern.

14. Verfahren zum Steuern eines Innendrucks einer Rohrleitung (12), wobei das Verfahren die Schritte umfasst:
a) Anbringen einer ersten Messvorrichtung (32) an einer Außenfläche eines ersten Rohrabschnitts (14) einer Rohrleitung (12), wobei die erste Messvorrichtung (32) wenigstens ein Sensorelement (34) und eine mit dem Sensorelement (34) elektrisch gekoppelte Leiterplatte (36) umfasst;
b) Detektieren einer druckinduzierten Querschnittsveränderung des ersten Rohrabschnitts (14) durch das Sensorelement (34) der ersten Messvorrichtung (32);
c) Erzeugen erster Dehnungsparameter, welche auf die detektierte Querschnittsveränderung des ersten Rohrabschnitts (14) bezogen sind, durch eine Verarbeitungseinheit der ersten Messvorrichtung (32);
d) Umwandeln der ersten Dehnungsparameter in Druckwerte auf Grundlage materialspezifischer Eigenschaften des ersten Rohrabschnitts (14);
e) Übertragen der Druckwerte an eine Steuereinheit durch eine Kommunikationseinheit der Messvorrichtung (32); und
f) Steuern eines Volumenstroms eines in der Rohrleitung (12) transportierten Mediums mittels der Steuereinheit in Abhängigkeit der Druckwerte.

15. Verfahren nach Anspruch 14,
**dadurch gekennzeichnet, dass** das Verfahren ferner die Schritte umfasst:
g) Anordnen einer zweiten Messvorrichtung (52) an einer Außenfläche eines zweiten Rohrabschnitts (XX) der Rohrleitung (12), wobei der zweite Rohrabschnitt (44) benachbart und stromabwärts zu einem gekrümmten Rohrabschnitt (46) der Rohrleitung (12) ausgebildet ist; und
h) Durchführen der Schritte b) bis d) mittels der zweiten Messvorrichtung (52), um zweite Dehnungsparameter zu erzeugen und diese mit den ersten Dehnungsparametern zur Umwandlung in Druckwerte zu kombinieren,
wobei die zweite Messvorrichtung (52) dazu eingerichtet ist, druckinduzierte Querschnittsveränderungen des zweiten Rohrabschnitts (44) zu detektieren, welche durch einen Strömungswechsel im Inneren des zweiten Rohrabschnitts (44) erzeugt werden.
